# EUROPÄISCHE PATENTSCHRIFT

(11) **EP 2 473 746 B1**
(45) Veröffentlichungstag und Bekanntmachung des Hinweises auf die Patenterteilung: **20.11.2013**
(21) Anmeldenummer: 10718983.9
(22) Anmeldetag: 10.05.2010
(51) Int. Cl.: F16B 5/02, F16B 41/00, F16J 15/10, F01M 11/00

(54) **DECKEL-MONTAGEEINHEIT**
COVER MOUNTING UNIT
UNITÉ DE MONTAGE DE COUVERCLE

(30) Priorität: 31.08.2009 DE 102009039508
(43) Veröffentlichungstag der Anmeldung: 11.07.2012
(73) Patentinhaber: Federal-Mogul Sealing Systems Gmbh, 57562 Herdorf (DE)
(72) Erfinder: SALAMEH, Ralf, 75053 Gondelsheim (DE)
(74) Vertreter: Becker Kurig Straus
(86) Internationale Anmeldenummer: PCT/EP2010/056328
(87) Internationale Veröffentlichungsnummer: WO 2011/023425

(56) Entgegenhaltungen:
- WO-A2-2006/089604
- US-A- 5 673 920
- US-A1- 2004 051 253

## Beschreibung

Die vorliegende Erfindung betrifft eine Deckel-Montageeinheit, insbesondere für den Automobilbereich. Solche Deckel-Montageeinheiten können beispielsweise als Zylinderkopfhauben, Ölwannen- oder Getriebedeckel zum Einsatz kommen. Die Deckel-Montageeinheit umfasst eine insbesondere dünnwandige Deckelwanne, eine Dichtung und zwei oder mehr Befestigungsschrauben.

Besonders im Automobilbereich gibt es viele Gehäuseteile am Motor oder Getriebe, die mit unterschiedlichen Deckeln verschlossen werden. Diese Deckel sind z.B. Zylinderkopfhauben oder auch Ölwannendichtungen, wie diese bei Motoren oder Getrieben zum Einsatz kommen. Bei den meisten bisher bekannten Systemen an Motoren ist es üblich, dass die Ölwanne waagerecht liegend unter dem Motor angeordnet ist. Dies bedeutet, dass die Ölwanne und auch die Ölwannenschrauben bei allen Wartungsarbeiten gut zugänglich sind. Diese Anordnung ist im Prinzip auch bei den üblichen Getriebebauformen zu sehen.

Bei neueren Getriebekonzepten, wie z.B. Doppelkupplungsgetrieben, kann die Getriebeölwanne in ihrer Lage von der Waagerechten stark abweichen. Daher kann in diesen Fällen die Zugänglichkeit zum Deckel oder zu den Schrauben wesentlich eingeschränkt sein.

Bestehen die Deckel aus Aluminium oder auch Kunststoff und sind als akustisch entkoppeltes System ausgelegt, ist es üblich, die akustisch entkoppelten Verbindungselemente im System zumindest vorzumontieren und mit dem Deckel als Modul anzuliefern. Heute übliche Dichtungen beim Einsatz von Blechölwannen sind Trägerrahmendichtungen die aus einem metallischen Trägerrahmen mit einer stirnseitig angespritzten elastomeren Dichtlippen bestehen.

Bei akustisch entkoppelten Zylinderkopfhauben oder auch Ölwannen aus Kunststoff oder Aluminiumguss ist es üblich, dass die Verschraubungselemente vormontiert werden. Es gibt aber auch nicht entkoppelte Systeme aus Kunststoff, die vormontierte Schrauben enthalten.

Bei allen diesen Lösungen sind im allgemeinen Metallhülsen im Einsatz, in denen die Schrauben verliersicher befestigt sind. Das System aus Hülse und Schraube wird in den meisten Fällen durch eine Öffnung im Verschraubungsbereich durch den Flansch gesteckt und wird auf der anderen Seite des Flansches durch einen an die Dichtung angespritzten Ring fixiert. Bei den nicht entkoppelten Lösungen werden z.B. die Hülsen mit der verliersicher befestigten Schraube direkt in die Haube eingepresst oder eingespritzt.

Diese Lösungen lassen sich sehr gut bei entsprechenden Flanschdicken realisieren, wie sie bei gegossenen Aluminium-, Magnesium oder gespritzten Kunststoffhauben üblich sind. Diese Systeme sind üblicherweise mit reinen Elastomerdichtungen ohne Trägerrahmen bestückt, mit denen sich diese Lösung gut realisieren lässt.

Bauartbedingt kommen bei Blechdeckeln andere Dichtsysteme zum Einsatz. Dies sind im Wesentlichen Trägerrahmendichtungen, die aus einem metallischen Träger mit einem angespritzten Dichtsystem bestehen. Da ein Blechdeckel maximal eine Flanschdicke von ca. 1-2 mm hat, können Konzepte wie oben beschrieben hier nicht zum Einsatz kommen.

Bei dünnen Deckeln ist die Flanschdicke nicht ausreichend, um die Schrauben-Hülsenkonzepte vorzumontieren. Es gibt keine Möglichkeit, die Verschraubungselemente aus Hülse und Schraube wie z.B. bei Aluminium- oder Kunststoffhauben in der Dichtung, die als reine Elastomerdichtung ausgeführt ist, zu fixieren.

Eine reine Elastomerdichtung braucht eine Nut zur Fixierung, wie sie bei Kunststoff oder Aluminiumhauben üblich ist. Nuten können bei Blechdeckeln nicht gefertigt werden. Daher kommen hier andere Konzepte wie Trägerrahmendichtungen zum Einsatz.

Dichtung wesentlich höher (z.B. 10-15 mm) und es ergibt sich daraus schon der Bauraum, der benötigt wird, damit die Schraube in der Hülse zurückgleiten kann. Das ist bei Aluminiumhauben vergleichbar. Dies gilt aber nicht bei dünnen Blechdeckeln, hier beträgt die Dichtungsdicke beispielsweise nur um die 1,5 mm.

Vormontierte Befestigungsschrauben würden bei dünnwandigen Deckeln an ihrem Gewindeteil weit vorstehen, und sie sind auch in ihrer Verschraubungslinie nicht stabil ausgerichtet. Vorstehende Schrauben würden bei der Montage aber dazu zwingen, alle Schrauben im Wesentlichen gleichzeitig festzuziehen. Dies ist bei beengten Montageverhältnissen in der Regel nicht möglich.

Die Gewinde im abzudichtenden Bauteil dürfen bei der Montage nicht beschädigt werden. Schiefstehende Schrauben könnten beim Einschrauben die Gewinde aber beschädigen. Eine genaue Ausrichtung der Schraubenachse ist daher notwendig. Bei herkömmlichen dünnwandigen Deckeln ist eine derartige Fixierung der Schraubenachse aber nicht möglich.

Bei den im Getriebebereich hauptsächlich im Einsatz befindlichen Blechhauben gibt es zum heutigen Zeitpunkt keine bekannte Lösung die die entsprechende im Folgenden beschriebene Aufgabe übernehmen kann.

Aus der Druckschrift WO 2006/089604 A2 betrifft eine Hülse zur Vormontage einer Flachdichtung auf einer Dichtfläche eines Maschinenbauteils, welches mit einem Loch zum Einstecken der Hülse versehen ist, wobei die Flachdichtung ein Loch zum Durchstecken der Hülse hat und der eine, erste Endbereich der Hülse zur Verkleinerung seines Außendurchmessers elastisch zusammengedrückt werden kann. Die Hülse ist am Außenumfang ihres ersten Endbereichs mit in beiden Richtungen der Hülsenachse wirksamen Anschlägen zum Halten der Hülse an der Dichtungsplatte in einer durch die Anschläge vorgegebenen axialen Lage versehen, und die Hülse ist an ihrem Außenumfang so ausgebildet, dass sich beim Einstecken der Hülse in das Loch des Maschinenbauteils eine reib- und/oder formschlüssige Verbindung zwischen dem Maschinenbauteil und der Hülse ergibt.

Die Aufgabe der vorliegenden Erfindung besteht darin, eine Montageeinheit vorzuschlagen, beispielsweise eine Getriebeölwanne mit Dichtung einschließlich Verschraubungssystem, die folgende Anforderungen abdeckt:

Der Deckel ist als dünnwandige Wanne ausgeführt, insbesondere als Blechwanne. Das Dichtkonzept beruht auf einer Trägerrahmendichtung. Die Befestigungsschrauben sind vormontiert und verliersicher mit der Wanne verbunden. Die Verschraubungspositionen sind jeweils exakt fixiert, da die Schrauben in der Regel nicht oder nicht ausreichend einfach zugänglich sind. Die Schrauben sind in Bezug auf die Verschraubungsachse sicher positioniert, d.h. die jeweilige Schraube darf nicht abkippen oder schief stehen. Die Schrauben sind in der Höhe sicher positioniert. Um eine gute und sichere Montage zu positioniert, d.h. die jeweilige Schraube darf nicht abkippen oder schief stehen. Die Schrauben sind in der Höhe sicher positioniert. Um eine gute und sichere Montage zu gewährleisten, bei denen die Gewinde im abzudichtenden Bauteil nicht beschädigt werden und die Schrauben einzeln angezogen werden können, dürfen die Schrauben beim Aufsetzen des Deckels nicht weiter herausstehen als zur Zentrierung in den Gewindelöchern im Flansch notwendig ist.

Die vorliegende Erfindung stellt daher eine Deckel-Montageeinheit bereit, umfassend
- eine dünnwandige Deckelwanne mit
   - einem Dichtungsflansch;
   - mindestens zwei Schraublöchern in dem Dichtungsflansch;
   - mindestens einer Fixieröffnung; und
   - einer verliersicher in jedem Schraubloch angeordneten Befestigungsschraube; und
- eine Trägerrahmendichtung mit
   - einem Träger;
   - einer Dichtung, die an dem Dichtungsflansch anliegt;
   - einer Schraubendurchführung für jedes Schraubloch;
   - einem Fixierelement für jede Fixieröffnung; und
   - einem Zentrierkörper für die Befestigungsschraube in jeder Schraubendurchführung.

Die Aufgabe wird erfindungsgemäß durch ein neuartiges Verschraubungssystem gelöst, das folgende Hauptelemente aufweist, die wiederum weitere Einzelelemente umfassen, die zu einem System bzw. einer Montageeinheit zusammengefügt die Lösung der Aufgabe übernehmen:
- dünnwandige Deckelwanne mit verliersicher befestigten Schrauben und Fixieröffnung
- Trägerrahmendichtung mit Fixierelement und Zentrierkörper für die Schrauben

Durch Fixieröffnung und zugehöriges Fixierelement werden die Deckelwanne und die Trägerrahmendichtung lagerichtig und verliersicher miteinander verbunden. Durch die Zentrierkörper werden die Befestigungsschrauben in korrekter Ausrichtung gehalten. Dabei sind die Befestigungsschrauben bevorzugt in axialer Richtung ausrichtbar.

Gemäß einer Ausführungsform greift das mindestens eine Fixierelement rastend in die jeweilige Fixieröffnung ein.

Dies kann beispielsweise durch eine wulstartige Verdickung des Fixierelements erreicht werden, wobei die Verdickung zumindest eine geringfügig größere Breite als die Fixieröffnung an der entsprechenden Stelle aufweist. Beim Zusammenfügen von Deckelwanne und Trägerrahmendichtung wird ein derartiges Fixierelement durch die Fixieröffnung gedrückt, so dass die Verdickung beide rastend aneinander festhält. Um das Eindrücken des Fixierelements zu erleichtern, kann selbiges vor der Verdickung verjüngt bzw. spitz ausgeführt werden.

Gemäß einer Ausführungsform ist eine Verdickung im Schaft der Befestigungsschrauben gebildet, die eine Verliersicherung bildet.

Bei einer vereinfachten Lösung kann die Schraube somit direkt in der Wanne befestigt werden und die Dichtung übernimmt die Führung. Hierbei hat die Schraube beispielsweise einen Bund, der durch einen Hinterschnitt an der Befestigungsbohrung bzw. dem Schraubloch der Blechwanne gedrückt wird. Hierdurch wird die Schraube verliersicher an der Wanne befestigt.

Gemäß einer Ausführungsform umfasst die Deckelwanne weiter
- eine in jedem Schraubloch angeordnete Buchse;
wobei die Befestigungsschrauben jeweils in der Buchse angeordnet sind.

Gemäß einer Ausführungsform ist eine Verliersicherung in den Buchsen gebildet.

Diese Verliersicherung kann alternativ oder ergänzend zu der vorstehend genannten Verliersicherung zwischen Schraube und Schraubloch vorgesehen werden.

Gemäß einer Ausführungsform besteht die Buchse aus einem metallischen Werkstoff.

Die Buchse ist bevorzugt aus einem metallischen Werkstoff, um die notwendigen Verschraubungskräfte übertragen zu können.

Gemäß einer Ausführungsform ist die Buchse mittels einer Klemmverbindung, Klebeverbindung oder Schweißverbindung mit der Deckelwanne verbunden.

Die verwendete Buchse mit der verliersicheren Schraube kann z.B. durch eine Klemmverbindung mit der Blechwanne verbunden werden, aufgeklebt oder auch direkt aufgeschweißt werden.

Gemäß einer Ausführungsform besteht die Deckelwanne aus einem metallischen Werkstoff.

Gemäß einer Ausführungsform besteht die Dichtung aus einem elastomeren Werkstoff.

Gemäß einer Ausführungsform besteht die Zentrierkörper aus einem elastomeren Werkstoff.

In dieser Ausführung werden im Bereich, im dem sich die Schrauben befinden, elastomere Zentrierkörper an die Dichtung angespritzt. Diese elastomeren Zentrierkörper übernehmen die Aufgabe, die Schrauben exakt in der Verschraubungsachse zu halten und zu führen, bis das Flanschgewinde beim Einschrauben die Führung übernimmt. Das Anspritzen gestattet es, die Anzahl der Arbeitsschritte und somit die Herstellungskosten niedrig zu halten.

Gemäß einer Ausführungsform besteht das mindestens eine Fixierelement aus einem elastomeren Werkstoff.

Diese Ausfuhrungsform gestattet es, das Fixierelement beim Anspritzen der elastomeren Dichtlippe der Trägerrahmendichtung direkt mit anzuspritzen, was die Anzahl der Arbeitsschritte und somit die Herstellungskosten verringert.

Gemäß einer Ausführungsform weisen die Befestigungsschrauben an ihrem Gewindeauslauf eine Einführhilfe auf.

Beispielsweise kann die Spitze der Schraube verjüngt, kegelförmig oder abgerundet ausgeführt werden, um das Einführen in die zugehörigen Gewinde zu erleichtern.

Gemäß einer Ausführungsform sind die Zentrierkörper so ausgelegt, dass sie die jeweilige Befestigungsschraube führen und/oder klemmend festhalten.

Diese Zentrierkörper können je nach Auslegung eine reine Führungsaufgabe ohne Klemmung übernehmen oder auch je nach Auslegung geringe bis stärkere Klemmkräfte aufbauen, welche die Schraube auch in axialer Richtung in ihrer Position fixieren. Hierbei kann jede Schraube auf die gewünschte axiale Position eingestellt werden. Dies kann evtl. bei der Handmontage im Reparaturfall große Vorteile haben. Im Reparaturfall ist die Zugänglichkeit meist im Vergleich zur Erstmontage bei der der Deckel evtl. schon vor der Getriebemontage montiert wird, wesentlich erschwert.

Die Ausführung der Zentrierkörper kann unterschiedlich erfolgen, beispielsweise als umlaufender Ring, als in Draufsicht wellenförmig ausgebildete Elemente oder mehrere sich verjüngende nach innen weisende Elemente umfassend.

Gemäß einer Ausführungsform beträgt die Dicke der Deckelwanne minimal etwa 0,3 bis 0,5 mm. Gemäß einer anderen Ausführungsform beträgt die Dicke der Deckelwanne maximal etwa maximal etwa 1-2 mm. Diese Maximal- bzw. Minimalwerte sind miteinander kombinierbar. Der Begriff "dünnwandig" ist somit im Kontext der Erfindung als eine Dicke bis hinunter auf 0,3 bis 0,5 mm und nicht wesentlich über 1-2 mm hinaus zu verstehen. Gemäß einer Ausführungsform ist die Fixieröffnung als durchgehendes oder als Blindloch ausgeführt.

### Kurze Beschreibung der Zeichnung

Die Erfindung wird im Folgenden unter Bezug auf die Figuren näher erläutert, in denen
- Fig. 1: Elemente der Montageeinheit im Querschnitt im noch nicht vormontierten Zustand zeigt;
- Fig. 2: die Montageeinheit von Fig. 1 in vormontiertem Zustand zeigt;
- Fig. 3: verschiedene Ausführungsformen von Zentrierkörpern zeigt; und
- Fig. 4: eine zweite Ausführungsform der Montageeinheit im Querschnitt zeigt.

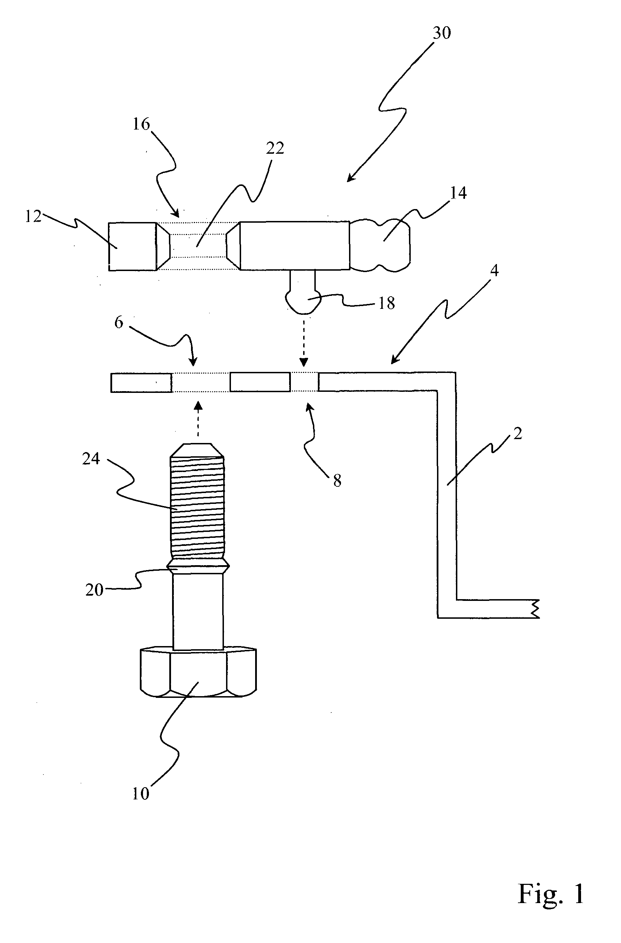

In Figur 1 sind Elemente einer erfindungsgemäßen Montageeinheit im Querschnitt gezeigt, im Zustand bevor die Vormontierung erfolgt. Die Mediumseite, also beispielsweise bei Verwendung des Deckels als Ölwanne Motor- oder Getriebeöl, befindet sich in dieser Figur rechts.

Eine dünnwandige Deckelwanne 2 weist mindestens zwei Schraublöcher 6 (nur eines ist hier gezeigt) auf, sowie mindestens eine Fixieröffnung 8. Die Fixieröffnung 8 ist hier als durchgehendes Loch gezeigt, kann in alternativen Ausführungsformen aber auch ein Blindloch sein. Die Deckelwanne 2 weist einen Dichtungsflansch 4 auf.

Eine Trägerrahmendichtung 30 umfasst einen Trägerrahmen 12 und eine Dichtung 14 zur Abdichtung am Dichtungsflansch 4 der Deckelwanne 2 auf. Die Trägerrahmendichtung 30 weist eine Schraubendurchführung 16 (nur eine ist hier gezeigt) pro Schraubloch der Deckelwanne 2 auf. In der Schraubendurchführung 16 ist ein Zentrierkörpern 22 angeordnet. Die Trägerrahmendichtung 30 weist ferner ein Fixierelement 18 pro Fixieröffnung 8 in der Deckelwanne 2 auf.

In dieser Ausführungsform ist keine Buchse für die Schrauben (nur eine ist hier gezeigt) vorgesehen. Die Schraube 10 weist ein Gewinde 24 und einen verdickten Bund 20 auf. Der Bund 20 ist im Umfang dicker als der Durchmesser des entsprechenden Schraublochs 6. Zur Vormontage der Deckel-Montageeinheit wird die Trägerrahmendichtung 30 an die Deckelwanne 2 angelegt, wobei das Fixierelement 18 durch die Fixieröffnung 8 gedrückt wird. In der gezeigten Ausführungsform wird durch eine entsprechende Gestaltung des Fixierelements 18 erreicht, dass diese rastend in die Fixieröffnung 8 eingreift. Deckelwanne 2 und Trägerrahmendichtung 30 werden so verliersicher aneinander befestigt. Die Schraube 10 wird in das entsprechende Schraubenloch 6 und die zugehörige Schraubendurchführung 16 gesteckt, wobei der Bund 20 zumindest durch die Schraublochöffnung gedrückt wird.

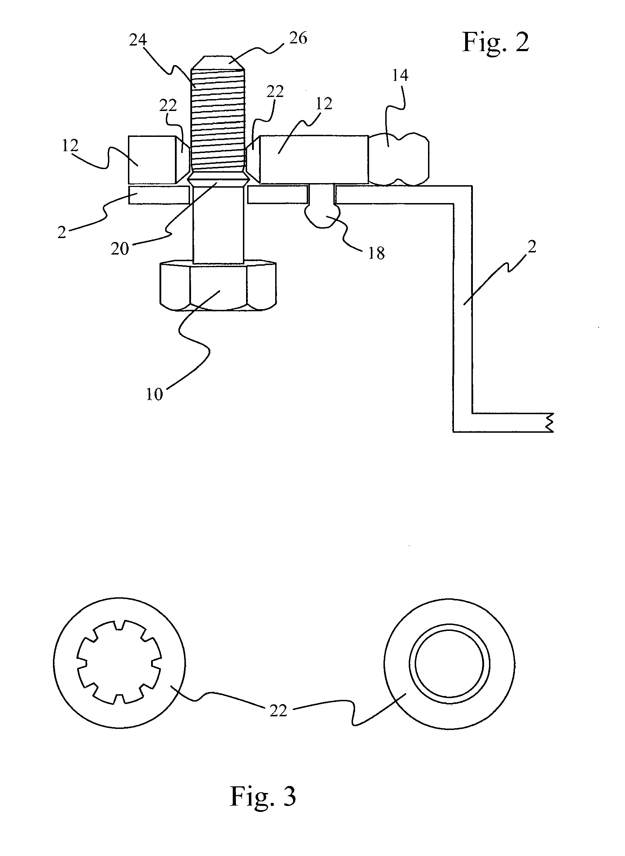

Figur 2 zeigt die Ausführungsform von Figur 1 im vormontierten Zustand. Dabei wird durch den im Umfang dickeren Bund 20 die Schraube 10 verliersicher in dem Schraubloch 6 gehalten. Um die Schraube 10 in richtiger Lage für das spätere Einschrauben in das abzudichtende Bauteil zu halten, wird diese von dem Zentrierkörper 22 führend und/oder klemmend festgehalten.

Deckelwanne 2 und Trägerrahmendichtung 30 werden durch das rastend in die Fixieröffnung 8 eingreifende Fixierelement 18 aneinander befestigt. Durch die bei dieser Ausführungsform vorhandene Verdickung des Fixierelements 18, die nach Eindrücken aus Sicht der Trägerrahmendichtung 30 hinter die Deckelwanne 2 greift, wird eine Verliersicherung erreicht. Die Dichtung 14 liegt dichtend an dem Dichtungsflansch der Deckelwanne 2 an. Figur 3 zeigt zwei beispielhafte Ausführungsformen von Zentrierkörpern 22 in Aufsicht. Diese können mit mehreren nach innen weisenden sich verjüngenden Elementen ansgebildet sein (linke Seite der Figur), oder mit einer dreieckigen oder trapezartigen (wie in Fig. 1 und 2 zu sehen) Querschnittsform. Eine andere nicht gezeigte Alternative sind in Aufsicht wellenförmige Innenränder. Je nach Gestaltung der Zentrierkörpern 22 wird erreicht, dass die darin befindliche Schraube zumindest geführt oder auch mehr oder weniger stark klemmend gehalten wird. Eine axiale Verschiebbarkeit der Schraube ist dabei bevorzugt, um die Montage zu erleichtern. Diese sollte aber nicht so leichtgängig sein, dass die Schraube sich von selbst axial verschiebt. Weiterhin soll eine Verkippung der Schraube möglichst verhindert werden.

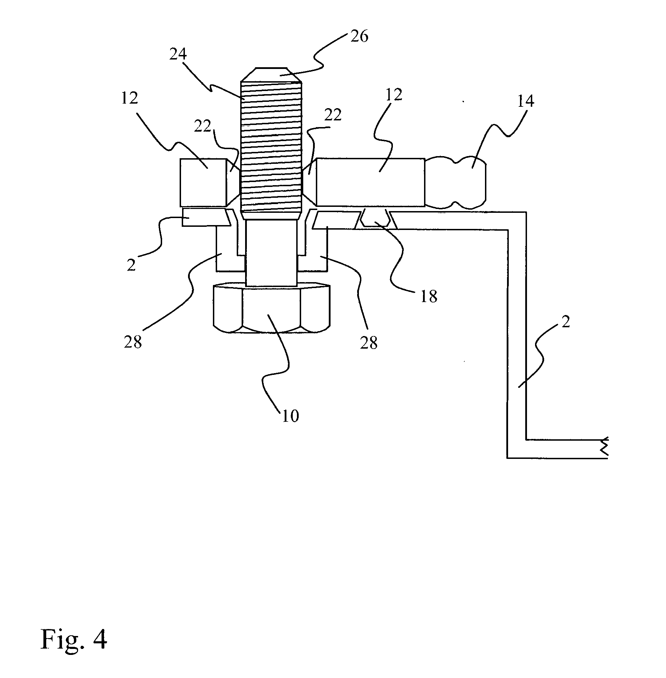

Figur 4 zeigt eine alternative Ausführungsform der Deckel-Montageeinheit im Querschnitt, mit im Wesentlichen den gleichen Elementen wie der von Figur 1. Jedoch ist bei dieser Ausführungsform in dem Schraubloch eine Buchse 28 angeordnet, in der die Schraube 10 verliersicher angeordnet ist. Dies kann beispielsweise dadurch erreicht werden, dass die Schraube 10 ein Gewinde 24 mit größerem Umfang als die Schraubenöffnung der Buchse 28 aufweist. Die Schraube 10 weist in dieser Ausführungsform keinen verdickten Bund 20 auf.

Ein Vorteil dieser Ausführungsform liegt darin, dass durch die Buchse 28 ein relativ großer axialer Verstellbereich der Schrauben 10 erreicht wird, obwohl die Deckelwanne 2 (im Vergleich zur Schraubenlänge) vergleichsweise dünnwandig ist.

Ein weiterer Unterschied liegt in der Ausgestaltung von Fixieröffnung und Fixierelement 18. Die Fixieröffnung ist hier als nicht durchgehendes Blindloch ausgeführt. Ein Hintergreifen des Fixierelements 18 ist daher nicht möglich. Um die Verliersicherung zu erreichen, sind Fixieröffnung und Fixierelement 18 hier im Wesentlichen stumpfkegelig ausgeführt, wobei das Fixierelement 18 zur Erleichterung des Eindrückens eine verjüngte Spitze aufweist.

Die Deckel-Montageeinheit gemäß der Erfindung bietet die folgenden Vorteile. Eine verliersichere und vormontierte Schraube ist auch bei Verwendung eines dünnwandigen Blechdeckels möglich. Die vormontierte Dichtung kann zur Montage optimal positioniert werden. Die Schraube befindet sich in mittels Zentrierung in optimaler Montageposition. Die Schraube wird durch Zentrierkörper und/oder Buchse optimal in der Verschraubungsachse fixiert. Ein Verkippen der Schraube wird verhindert. Eine axiale Verschiebbarkeit der Schraube ist gegeben. Es besteht die Möglichkeit, die Schraube zu fixieren und leicht verschieblich zu halten oder eine definierte Klemmkraft zu erzeugen.

## Patentansprüche

1. Deckel-Montageeinheit, umfassend:
- eine dünnwandige Deckelwanne (2) mit
- einem Dichtungsflansch (4);
**gekennzeichnet dadurch, dass**
die Deckelwanne (2)
- mindestens zwei Schraublöcher (6) in dem Dichtungsflansch;
- mindestens eine Fixieröffnung (8); und
- eine verliersicher in jedem Schraubloch (6) angeordnete Befestigungsschraube (10) aufweist ;
und dass die Deckel-Montageeinheit
- eine Trägerrahmendichtung (30) mit
- einem Träger (12);
- einer Dichtung (14), die an dem Dichtungsflansch (4) anliegt;
- einer Schraubendurchführung (16) für jedes Schraubloch (6);
- einem Fixierelement (18) für jede Fixieröffnung (8); und
- einem Zentrierkörper (22) für die Befestigungsschraube (10) in jeder Schraubendurchführung (16) umfasst.

2. Deckel-Montageeinheit nach Anspruch 1, wobei das mindestens eine Fixierelement (18) rastend in die jeweilige Fixieröffnung (8) eingreift.

3. Deckel-Montageeinheit nach Anspruch 1 oder 2, wobei eine Verdickung (20) im Schaft der Befestigungsschrauben (10) gebildet ist, die eine Verliersicherung bildet.

4. Deckel-Montageeinheit nach einem der vorhergehenden Ansprüche, wobei die Deckelwanne (2) weiter umfasst:
- eine in jedem Schraubloch angeordnete Buchse (28); und
wobei die Befestigungsschrauben (10) jeweils in der Buchse (28) angeordnet sind.

5. Deckel-Montageeinheit nach Anspruch 4, wobei eine Verliersicherung in den Buchsen (28) gebildet ist.

6. Deckel-Montageeinheit nach einem der Ansprüche 4 oder 5, wobei die Buchse (28) aus einem metallischen Werkstoff besteht.

7. Deckel-Montageeinheit nach einem der Ansprüche 4, 5 oder 6, wobei die Buchse (28) mittels einer Klemmverbindung, Klebeverbindung oder Schweißverbindung mit der Deckelwanne (2) verbunden ist.

8. Deckel-Montageeinheit nach einem der vorhergehenden Ansprüche, wobei die Deckelwanne (2) aus einem metallischen Werkstoff besteht.

9. Deckel-Montageeinheit nach einem der vorhergehenden Ansprüche, wobei die Dichtung (14) aus einem elastomeren Werkstoff besteht.

10. Deckel-Montageeinheit nach einem der vorhergehenden Ansprüche, wobei die Zentrierkörper (22) aus einem elastomeren Werkstoff bestehen.

11. Deckel-Montageeinheit nach einem der vorhergehenden Ansprüche, wobei das mindestens eine Fixierelement (18) aus einem elastomeren Werkstoff besteht.

12. Deckel-Montageeinheit nach einem der vorhergehenden Ansprüche, wobei die Befestigungsschrauben (10) an ihrem Gewindeauslauf eine Einführhilfe aufweisen.

13. Deckel-Montageeinheit nach einem der vorhergehenden Ansprüche, wobei die Zentrierkörper (22) so ausgelegt sind, dass sie die jeweilige Befestigungsschraube (10) führen und/oder klemmend festhalten.

14. Deckel-Montageeinheit nach einem der vorhergehenden Ansprüche, wobei die Dicke der Deckelwanne (2) im Bereich von minimal etwa 0,3 bis 0,5 mm und/oder maximal etwa 1-2 mm liegt.

15. Deckel-Montageeinheit nach einem der vorhergehenden Ansprüche, wobei die Fixieröffnung (8) als durchgehendes oder als Blindloch ausgeführt ist.

## Claims

1. A cover assembly unit, comprising:
- a thin-walled cover pan (2) with
- a sealing flange (4);
**characterized in that** the cover pan (2) comprises
- at least two screw holes (6) in the sealing flange;
- at least one fixing opening (8); and - a fastening screw (10) captively arranged in each screw hole (6); and
that the cover assembly unit comprises
- a carrier frame gasket (30) with
- a carrier (12);
- a gasket (14) bearing against the sealing flange (4);
- a screw passage (16) for each screw hole (6);
- a fixing element (18) for each fixing opening (8); and
- a centring body (22) for the fastening screw (10) in each screw passage (16).

2. The cover assembly unit according to Claim 1, wherein the at least one fixing element (18) engages in the respective fixing opening (8) in an engaging manner.

3. The cover assembly unit according to Claim 1 or 2, wherein a thickened part (20) is formed in the shank of the fastening screws (10), which forms a captivity device.

4. The cover assembly unit according to any one of the preceding claims, wherein the cover pan (2) furthermore comprises:
- a bush (28) arranged in each screw hole; and
wherein the fastening screws (10) are each arranged in the bush (28).

5. The cover assembly unit according to Claim 4, wherein a captivity device is formed in the bushes (28).

6. The cover assembly unit according to any one of the Claims 4 or 5, wherein the bush (28) consists of a metallic material.

7. The cover assembly unit according to any one of the Claims 4, 5 or 6, wherein the bush (28) is connected to the cover pan (2) by means of a clamped connection, glued connection or welded connection.

8. The cover assembly unit according to any one of the preceding claims, wherein the cover pan (2) consist of a metallic material.

9. The cover assembly unit according to any one of the preceding claims, wherein the gasket (14) consists of an elastomer material.

10. The cover assembly unit according to any one of the preceding claims, wherein the centring bodies (22) consist of an elastomer material.

11. The cover assembly unit according to any one of the preceding claims, wherein the at least one fixing element (18) consists of an elastomer material.

12. The cover assembly unit according to any one of the preceding claims, wherein the fastening screws (10) at their thread end comprise an insertion aid.

13. The cover assembly unit according to any one of the preceding claims, wherein the centring bodies (22) are so designed that they guide and/or retain in a clamping manner the respective fastening screw (10).

14. The cover assembly unit according to any one of the preceding claims, wherein the thickness of the cover pan (2) lies in the range from minimal approximately 0.3 - 0.5 mm and/or maximal approximately 1 - 2 mm.

15. The cover assembly unit according to any one of the preceding claims, wherein the fixing opening (8) is embodied as continuous or as blind hole.

## Revendications

1. Unité de montage de bouchon, comprenant :
- un carter à bouchon (2) à parois fines, comprenant t
- une bride d'étanchéité (4) ;
**caractérisée en ce que**
le carter à bouchon (2) présente
- au moins deux trous de vissage (6) dans la bride d'étanchéité ;
- au moins une ouverture de fixation (8) ; et
- une vis de fixation (10) imperdable disposée dans chaque trou de vissage (6) ;
et **en ce que** l'unité de montage de bouchon comprend
- un joint de cadre de support (30) avec
- un support (12) ;
- un joint (14) qui repose sur la bride d'étanchéité (4) ;
- un guide de vis (16) pour chaque trou de vissage (6) ;
- un élément de fixation (18) pour chaque ouverture de fixation (8) ; et
- un corps de centrage (22) pour la vis de fixation (10) dans chaque guide de vis (16).

2. Unité de montage de bouchon selon la revendication 1, dans laquelle l'au moins un élément de fixation (18) se met en prise par encliquetage dans l'ouverture de fixation (8) respective.

3. Unité de montage de bouchon selon la revendication 1 ou 2, dans laquelle un épaississement (20) est formé dans la tige des vis de fixation (10) et forme l'imperdabilité.

4. Unité de montage de bouchon selon l'une des revendications précédentes, dans laquelle le carter à bouchon (2) comprend en outre :
- une douille (28) disposée dans chaque trou de vissage ; et
dans laquelle les vis de fixation (10) sont disposées respectivement dans la douille (28).

5. Unité de montage de bouchon selon la revendication 4, dans laquelle une imperdabilité est formée dans les douilles (28).

6. Unité de montage de bouchon selon l'une des revendications 4 ou 5, dans laquelle la douille (28) est en matériau métallique.

7. Unité de montage de bouchon selon l'une des revendications 4, 5 ou 6, dans laquelle la douille (28) est reliée au carter à bouchon (2) au moyen d'une liaison par serrage, d'une liaison par collage ou d'une liaison par soudage.

8. Unité de montage de bouchon selon l'une des revendications précédentes, dans laquelle le carter à bouchon (2) est en matériau métallique.

9. Unité de montage de bouchon selon l'une des revendications précédentes, dans laquelle le joint (14) est en matériau élastomère.

10. Unité de montage de bouchon selon l'une des revendications précédentes, dans laquelle les corps de centrage (22) sont en matériau élastomère.

11. Unité de montage de bouchon selon l'une des revendications précédentes, dans laquelle l'au moins un élément de fixation (18) est en matériau élastomère.

12. Unité de montage de bouchon selon l'une des revendications précédentes, dans laquelle les vis de fixation (10) présentent une aide à l'introduction sur leur fin de filetage.

13. Unité de montage de bouchon selon l'une des revendications précédentes, dans laquelle les corps de centrage (22) sont ainsi conçus qu'ils guident la vis de fixation (10) respective et/ou la maintiennent par serrage.

14. Unité de montage de bouchon selon l'une des revendications précédentes, dans laquelle l'épaisseur du carter à bouchon (2) est située dans la plage minimale entre 0,3 et 0,5 mm et/ou maximale d'environ 1 - 2 mm.

15. Unité de montage de bouchon selon l'une des revendications précédentes, dans laquelle l'ouverture de fixation (8) est conçue traversante ou en tant que trou borgne.
